Europäisches Patentamt

European Patent Office

Office européen des brevets

(19)

(11) Veröffentlichungsnummer: **0 113 810**
A1

## (12) EUROPÄISCHE PATENTANMELDUNG

(21) Anmeldenummer: **83108786.1**

(22) Anmeldetag: **06.09.83**

(51) Int. Cl.³: **B 23 Q 1/24**, B 23 Q 1/26

(30) Priorität: **10.12.82 DE 3245790**

(43) Veröffentlichungstag der Anmeldung: **25.07.84**
**Patentblatt 84/30**

(84) Benannte Vertragsstaaten: **AT DE FR GB IT**

(71) Anmelder: **Oerlikon-Boehringer GmbH, Stuttgarter Strasse 50 Postfach 220, D-7320 Göppingen (DE)**

(72) Erfinder: **Berbalk, Hermann, Ing.-grad.,**
**Liebensteinerstrasse 7, D-7320 Göppingen (DE)**

(74) Vertreter: **Vogeser, Werner, Dipl.-Ing. et al,**
**Patentanwälte Hansmann & Vogeser**
**Albert-Rosshaupter-Strasse 65, D-8000 München 70 (DE)**

(54) Angetriebener Setzstock für Drehmaschinen.

(57) Die Erfindung betrifft einen angetriebenen Setzstock für Drehmaschinen, insbesondere Kurbelwellendrehmaschinen, mit einem das zu bearbeitende Werkstück umgebenden Antriebszahnrad (1), in dem ein Spannfutter zur Aufnahme des Werkstücks angeordnet ist und das beidseitig im Bereich des Außenumfangs durch eine Lagerung in einer am Maschinenbett befestigten Tragplatte (3, 3') gehalten ist, bei dem die Lagerung des Antriebszahnrades (1) hinsichtlich Belastbarkeit und möglicher Drehzahl dadurch verbessert wird, daß die Lagerung aus einzelnen Rollenlagern (23) besteht, von denen jedes aus einer Rolle (4) und einem an der Tragplatte (3, 3') befestigten Rollentragbolzen (7) gebildet ist.

ACTORUM AG

- 1 -

0113810

OERLIKON-BOEHRINGER GMBH


Angetriebener Setzstock für Drehmaschinen


Die Erfindung betrifft einen angetriebenen Setzstock für Drehmaschinen entsprechend dem Oberbegriff des Anspruchs 1.

Eine Drehmaschine in Form einer Kurbelwellen-Drehmaschine mit angetriebenem Setzstock ist aus dem aus dem Jahre 1977 stammenden Firmenprospekt "VDF Produktions-Kurbelwellen-Drehmaschinen KD 1365" bekannt. Bei derartigen Maschinen wird eine Kurbelwelle zur Mittellager-, Endzapfen- und Flanschbearbeitung an den Enden in Spitzen gelagert und mittels eines in der Mitte der Kurbelwelle befindlichen angetriebenen Setzstocks in Drehung versetzt. Der Setzstock weist ein Antriebszahnrad auf, in dem ein Spannfutter angeordnet ist, das einen Hubzapfen der Kurbelwelle aufnimmt und das Antriebsdrehmoment auf die Kurbelwelle überträgt. Das Antriebszahnrad ist beidseitig durch Lager üblicher Art in Schrägzylinderrollen-Ausführung gelagert. Der Außenring der Lager sitzt in einer am Maschinenbett angeschraubten Tragplatte und der Innenring läuft mit dem Antriebszahnrad um. Diese Lager sind aufgrund der sehr begrenzten Einbauverhältnisse dünnwandig und infolge der großen Durchmesser in ihrer Drehzahl begrenzt. Diese Lager müssen sowohl Radialals auch Axialkräfte aufnehmen. Die damit erreichbaren Drehzahlen sind dem heutigen Stand der Technik entsprechend zu niedrig, um mit den modernen Hartmetallwerkzeugen möglichst kurze Bearbeitungszeiten zu erreichen.

Der Erfindung liegt die Aufgabe zugrunde, die Lagerung des Antriebszahnrades eines derartigen angetriebenen Setzstockes hinsichtlich Belastbarkeit und möglicher Drehzahl zu verbessern.

Gelöst wird diese Aufgabe gemäß der Erfindung durch die im kennzeichnenden Teil des Anspruchs 1 angegebenen Merkmale. Zweckmäßige Ausgestaltungen der Erfindung ergeben sich aus den Unteransprüchen.

Aufgrund der vorgeschlagenen Ausbildung ist das Antriebszahnrad beidseitig nicht durch ein einzelnes Lager gehalten, sondern durch eine Vielzahl von Einzelrollenlagern, die gesondert an der Tragplatte befestigt sind und als kompakte Einheit größere Belastungen aushalten und auch bei hohen Drehzahlen verwendet werden können.

Es ist nicht erforderlich, daß sich die Rollenlager beidseitig über den gesamten Außenumfang des Antriebszahnrades erstrecken, es ist vielmehr möglich, daß in dem Bereich, der zur Bearbeitung der Mittellager zwischen zwei aufeinanderfolgenden Mittellagern für die Werkzeuge zugänglich sein muß, keine Rollenlager vorgesehen sind. In diesem Falle kann die Tragplatte in diesem Bereich horizontale Ausschnitte aufweisen, so daß die zu bearbeitenden Mittellager über ihre gesamte axiale Erstreckung zugänglich sind.

Die Erfindung wird nachstehend anhand der Fig. 1 bis 3 beispielsweise erläutert. Es zeigt:

Fig. 1　einen Querschnitt des Antriebszahnrades,

Fig. 2　eine Aufsicht der Tragplatte und

Fig. 3    teilweise im Schnitt eine Seitenansicht eines
einzelnen Rollenlagers.

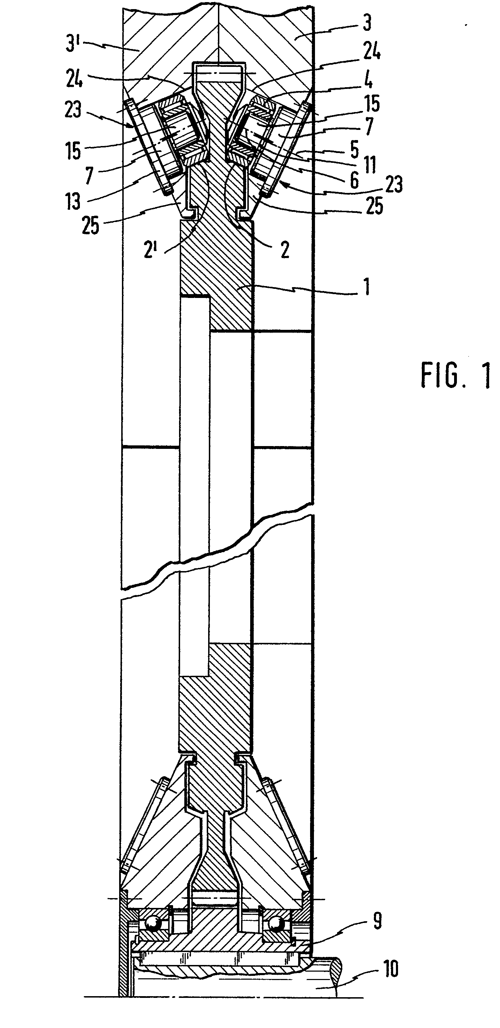

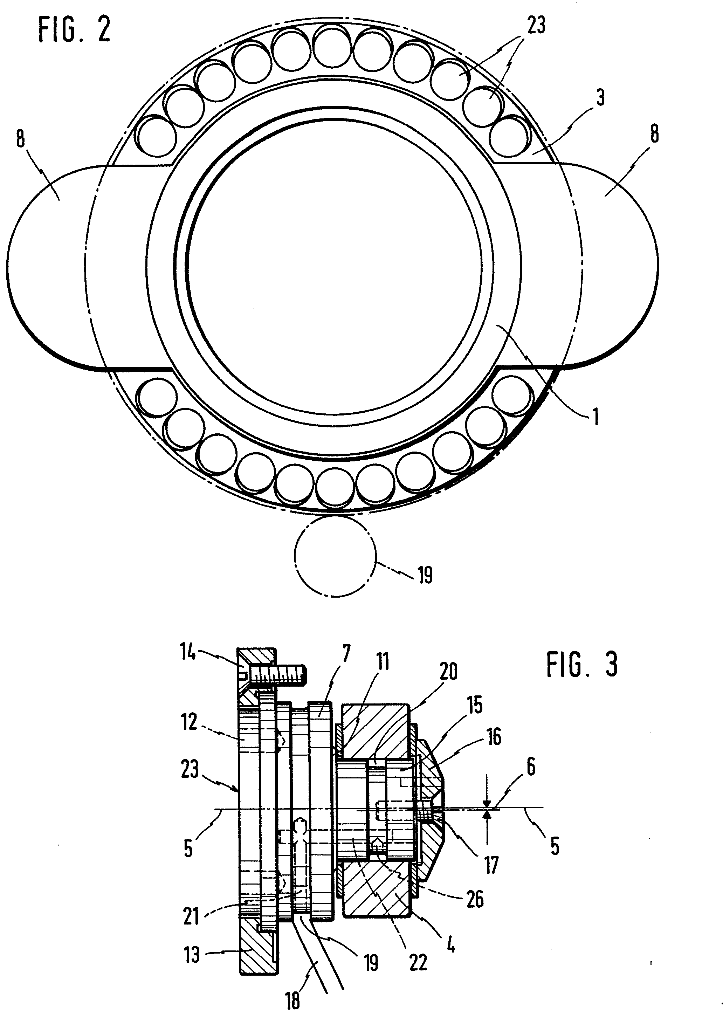

Wie die Fig. 1 und 2 zeigen, besteht der angetriebene
Setzstock aus einer am Maschinenbett einer Kurbelwellen-
drehmaschine anschraubbaren rechteckigen, zweiteiligen
Tragplatte 3, 3', in der ein Antriebszahnrad 1 gelagert
ist. Das Antriebszahnrad 1 kann in einer zentralen
Öffnung ein nicht gezeigtes Spannfutter für eine zu bearbeitende Kurbelwelle aufnehmen. Das Antriebszahnrad 1
kämmt mit einem Ritzel 9, das auf einer Antriebswelle 10
sitzt.

Die beidseitige Lagerung des Antriebszahnrades 1 in der
Tragplatte 3, 3' besteht aus einzelnen Rollenlagern 23.
Die Rollenlager 23 sind über den Außenumfang des Antriebszahnrads 1 verteilt, jedoch weist die Tragplatte 3, 3'
horizontale Ausschnitte 8 in einem Bereich auf, der beidseitig der Horizontalen durch die Ebene des Antriebszahnrads 1 liegt. Die horizontalen Ausschnitte 8 dienen
dazu, die Zugänglichkeit der zu bearbeitenden Mittellager
im Bereich des Setzstockes zu ermöglichen, so daß die
Mittellager über ihre gesamte axiale Erstreckung bearbeitet werden können.

Wie die Fig. 1 und 3 zeigen, hat jedes Rollenlager 23
einen Rollentragzapfen 7 mit einem zylindrischen Ansatz
15, auf dem eine Rolle 4 sitzt. Wie insbes. Fig. 3 zeigt,
verlaufen die zentrale Achse 5 des Tragzapfens 7 und
die zentrale Achse 6 des zylindrischen Ansatzes 5 und
damit auch der Rolle 4 parallel zueinander, so daß
sich zwischen jeder Rolle 4 und dem zugehörigen Tragbolzen
7 eine Exzentrizität ergibt. Wenn also der Tragzapfen 7

- 4 -                                              0113810

gedreht wird, kann das Spiel zwischen der Tragplatte 3, 3' und dem Antriebszahnrad 1 eingestellt werden. Die Verstellung eines Tragbolzens 7 kann mittels eines in Öffnungen 12 des Tragbolzens einsetzbaren Steckschlüssels erfolgen.

Die Achsen 5 und 6 der Tragbolzen 7 bzw. der Ansätze 15 bzw. der Rollen 4 verlaufen schräg zur zentralen Achse des Antriebszahnrads 1, so daß die Rollenlager 23 sowohl axiale als auch radiale Kräften aufnehmen können. Hierzu sind an der Tragplatte 3, 3' schräge Laufbahnen 24 und an dem Antriebszahnrad schräge Laufflächen 2, 2' ausgebildet.

Jedes Rollenlager 23 ist an der Tragplatte 3, 3' durch einen Ring 13 gehalten, der über die Tragbolzen 7 greift. Die Ringe 23 sind durch Schrauben 14 an der Tragplatte 3, 3' befestigt. Radial innerhalb jedes Rollenlagers 23 hat die Tragplatte 3, 3' einen Abschnitt 25, der in eine Ringnut des Antriebszahnrads 1 eingreift. Die Rollenlager 23 sind somit an ihrem gesamten Umfang fest in der Tragplatte 3, 3' gehalten. Die Rolle 4 eines Rollenlagers 23 wird auf den zylindrischen Ansatz 15 durch eine mittels einer Schraube 17 befestigte Kappe 16 gehalten und liegt auf der gegenüberliegenden Seite an einem Anlaufbund 11 des Tragbolzens 7 an.

Die Schmierung der Lager erfolgt über einen schematisch angedeuteten Zulaufkanal 18, der in eine Ringnut 19 des Tragbolzens 7 mündet. Mit der Ringnut 19 steht ein zur Achse 5 senkrecht verlaufender Kanal 21 in Verbindung, der wiederum mit einem axialen Kanal 22 verbunden ist, der sich in den Ansatz 5 erstreckt und über einen senkrechten Kanal 26 mit einer Ringnut 20 am Ansatz 15 verbunden ist.

Angetriebener Setzstock für Drehmaschinen

PATENTANSPRÜCHE

1.      Angetriebener Setzstock für Drehmaschinen, insbes.
Kurbelwellendrehmaschinen, mit einem das zu bearbeitende
Werkstück umgebenden Antriebszahnrad, in dem ein Spannfutter zur Aufnahme des Werkstücks angeordnet ist und das
beidseitig im Bereich des Außenumfangs durch eine Lagerung in einer am Maschinenbett befestigten Tragplatte
gehalten ist, d a d u r c h   g e k e n n z e i c h -
n e t ,   daß die Lagerung aus einzelnen Rollenlagern
(23) besteht, von denen jedes aus einer Rolle (4) und
einem an der Tragplatte (3, 3') befestigten Rollentragbolzen (7) gebildet ist.

2.      Setzstock nach Anspruch 1, d a d u r c h   g e -
k e n n z e i c h n e t ,   daß jeder Tragbolzen (7)
einen zylindrischen Ansatz (15) aufweist, auf dem die
Rolle (4) sitzt.

3.      Setzstock nach Anspruch 1 oder 2, d a d u r c h
g e k e n n z e i c h n e t ,   daß die Achse (5) jedes
Tragbolzens (7) zur Rollenachse (6) bzw. zur Achse des
zylindrischen Ansatzes (15) des Tragbolzens (7) parallel
verläuft, so daß Tragbolzen und Rolle exzentrisch zueinander angeordnet sind.

4. Setzstock nach einem der Ansprüche 1 bis 3, d a d u r c h g e k e n n z e i c h n e t , daß die Achsen (6) der Rollen (4) zur Achse des Antriebszahnrades (1) geneigt verlaufen, und daß an der Tragplatte (3, 3') und am Antriebszahnrad (1) schräge Laufbahnflächen (2, 2', 24) angeordnet sind.

5. Setzstock nach einem der Ansprüche 1 bis 4, d a d u r c h g e k e n n z e i c h n e t , daß die Tragbolzen (7) durch über die Tragbolzen greifende Ringe (13) an der Tragplatte (3, 3') befestigt sind.

6. Setzstock nach Anspruch 5, d a d u r c h g e - k e n n z e i c h n e t , daß die Ringe (13) durch Schrauben (14) an der Tragplatte (3, 3') befestigt sind.

7. Setzstock nach Anspruch 3, d a d u r c h g e - k e n n z e i c h n e t , daß die Tragbolzen (7) Öffnungen (12) zum Einsetzen eines Steckschlüssels aufweisen, mittels dem die Exzentrizität zwischen den Tragbolzen (7) und den Rollen (4) einstellbar ist.

8. Setzstock nach einem der Ansprüche 1 bis 7, d a d u r c h g e k e n n z e i c h n e t , daß die Rollenlager (23) nur teilweise über den Umfang des Antriebszahnrades (1) verteilt sind.

9. Setzstock nach Anspruch 8, d a d u r c h g e - k e n n z e i c h n e t , daß in einem sich beidseitig zur Horizontalen durch die Ebene des Antriebszahnrads (1) erstreckenden Bereich keine Rollenlager (23) angeordnet sind.

10. Setzstock nach Anspruch 8 oder 9, d a d u r c h g e k e n n z e i c h n e t , daß die Tragplatte (3, 3') horizontale Ausschnitte (8) aufweist.

11.     Setzstock nach einem der Ansprüche 3 bis 10, d a d u r c h   g e k e n n z e i c h n e t ,  daß die Rollen (4) durch Kappen (16) an den zylindrischen Ansätzen (15) gehalten sind.

12.     Setzstock nach einem der Ansprüche 3 bis 11, d a d u r c h   g e k e n n z e i c h n e t ,  daß die Bolzen (7) einen Anlaufbund (11) für die Rollen (4) aufweisen.

13.     Setzstock nach einem der Ansprüche 3 bis 12, d a d u r c h   g e k e n n z e i c h n e t ,  daß die Bolzen (7) und ihre  Ansätze (15) Schmiermittelnuten (19, 20) und Schmiermittelkanäle (21, 22, 26) aufweisen.

1/2

0113810

FIG. 1

0113810

FIG. 2

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-3 851 869 (DAMEWOOD)<br>* Spalte 3, Zeilen 33-64 * | 1-5 | B 23 Q 1/24<br>B 23 Q 1/26 |
| X | FR-A-2 306 769 (PEUGEOT)<br>* Seite 2, Zeilen 34-37; Seite 3, Zeilen 13-15 * | 5,6 | |
| X | FR-A- 867 867 (BATA)<br>* Seite 2, Zeilen 94-102 * | 7 | |
| X | US-A-2 396 841 (FLYGARE)<br>* Spalte 2, Zeilen 12-41 * | 11,12 | |
| A | US-A-4 359 676 (FUJIOKA)<br>* Spalte 2, Zeilen 51-55; Figur 4 * | 10 | RECHERCHIERTE SACHGEBIETE (Int. Cl. 3)<br><br>B 23 Q<br>B 23 B<br>B 24 B |

Der vorliegende Recherchenbericht wurde für alle Patentansprüche erstellt.

| Recherchenort | Abschlußdatum der Recherche | Prüfer |
|---|---|---|
| DEN HAAG | 21-03-1984 | DE GUSSEM J.L. |